# DEMANDE DE BREVET EUROPEEN

(11) **EP 2 136 008 A1**
(43) Date de publication de la demande: **23.12.2009**
(21) Numéro de dépôt: 09290406.9
(22) Date de dépôt: 02.06.2009
(51) Int. Cl.: E03F 5/16, B01D 17/02, C02F 1/00

(54) **Séparateur à hydrocarbures déstine au traitement d'eaux de ruissellement**

(30) Priorité: 18.06.2008 FR 0803392
(71) Demandeur: Societe Eudoise d'Environnement et de Separation, 76260 Etalondes (FR)
(72) Inventeur: Le Prince, Guy, 96260 Eu (FR)
(74) Mandataire: Jaunez, Xavier

(57) **Abrégé**

L'invention concerne un séparateur à hydrocarbures destiné au traitement d'eaux de ruissellement, comportant un caisson principal (11) délimitant intérieurement un compartiment débourbeur (12) et un compartiment séparateur (13) de part et d'autre d'un trou d'homme (14).

Conformément à l'invention, le séparateur à hydrocarbures (10) comporte un module d'écoulement de sortie (30) disposé à l'intérieur du caisson principal (11), ledit module d'écoulement de sortie comprenant une embase (33) supportant un tubage (31) et un flotteur (32), et étant agencé dans l'une ou l'autre de deux positions différentes, dont une première position correspondant à une utilisation du séparateur (10) avec un caisson de by-pass (20), dans laquelle le tubage (31) communique avec un compartiment de sortie (23) du caisson de by-pass (20), et une deuxième position correspondant à une utilisation du séparateur (10) sans caisson de by-pass (20), dans laquelle le tubage (31) communique avec un orifice de sortie (19) du caisson principal (11).

## Description

La présente invention est du domaine du traitement des eaux pluviales ou industrielles, et a plus particulièrement pour objet un perfectionnement aux séparateurs à hydrocarbures destinés au traitement d'eaux de ruissellement.

### ARRIERE-PLAN DE L'INVENTION

Sur toutes les zones de circulation de véhicules (parkings, voieries, aires de lavage, aires de dépotage, stations-service, etc...), les eaux de ruissellement apparaissant en cas de pluies ou de nettoyage renferment une quantité plus ou moins importante d'hydrocarbures, de boues et de diverses matières solides en suspension qu'il est nécessaire d'éliminer avant le rejet en milieu naturel ou en station d'épuration.

On a déjà proposé de nombreux séparateurs à hydrocarbures qui sont du type à compartiment débourbeur et compartiment séparateur, ces deux compartiments étant montés en série, de façon que les eaux de ruissellement ayant pénétré dans le séparateur en ressortent dans un état débourbé, et débarrassées des hydrocarbures, vers une canalisation de sortie.

On pourra se référer, au titre de l'arrière-plan technologique, aux documents FR-A-2 654 950, FR-A-2 577 917, FR-A-2 754 871, et FR-A-2 836 471.

En cas d'orages ou de fortes pluies, la situation se complique dans la mesure où des volumes d'eaux de ruissellement avec des débits très importants sont introduits dans le séparateur, lesquels débits d'eaux ne peuvent la plupart du temps être intégralement débarrassés des hydrocarbures qu'ils contiennent. Pour faire face à cette difficulté, on a développé il y a une vingtaine d'années des dispositifs de déviation de flux intégrés aux séparateurs à hydrocarbures, en général appelés dispositif de by-pass ou déversoirs d'orage. La fonction d'un tel dispositif de by-pass est de recueillir les eaux lors d'une augmentation de débit, ainsi que les eaux n'accédant plus dans le compartiment séparateur lorsque celui-ci est saturé, et de renvoyer directement vers la sortie le flux qui est supérieur à la capacité de traitement du séparateur. En effet, les compartiments séparateurs sont classiquement pourvus d'un système d'obturation automatique, en général à flotteur, qui, en cas de saturation et/ou d'accumulation d'hydrocarbures, vient fermer progressivement la sortie du compartiment séparateur, l'intégralité des eaux en entrée de l'appareil étant alors évacuée directement par le dispositif de by-pass. Pour l'arrière-plan technologique relatif aux dispositifs de by-pass, on pourra se référer aux documents FR-A-2 642 745, NL-C-1 015 934, US-A-2005/184007, et US-A-2004/045 907.

Plus récemment, on a proposé un dispositif de by-pass réalisé de façon modulaire, avec un système en deux demi-anneaux reliant des boîtiers de connexion d'entrée et de sortie diamétralement opposés, comme cela est décrit dans le document FR-A-2 881 737.

Enfin, pour compléter l'arrière-plan technologique, on peut citer le document US-A-2005/103698 qui décrit un dispositif de by-pass constitué par un caisson tridimensionnel unitaire, enterré dans une fosse associée qui est distincte de la fosse principale logeant le caisson principal du séparateur.

Les séparateurs connus décrits dans les documents précités présentent divers inconvénients et/ou limitations.

Un premier type d'inconvénients et de limitations concerne la circulation des écoulements entre le compartiment débourbeur et le compartiment séparateur des séparateurs à hydrocarbures. Les séparateurs traditionnels présentent en effet, en entrée du compartiment séparateur, un passage obligé menant à un filtre de coalescence. Ce filtre de coalescence est en général monté au travers d'une paroi verticale formant une cloison intérieure du caisson principal, la direction principale de traversée du filtre de coalescence étant horizontale ou légèrement inclinée par rapport à l'horizontale. Par suite, en aval du filtre de coalescence, les écoulements sont encore à un niveau relativement bas du fait de l'agencement nécessairement bas du filtre de coalescence. En conséquence, le processus de séparation est d'efficacité limitée, et ce principalement en raison d'une trajectoire insuffisamment longue pour les écoulements traversant le séparateur, et de changements de vitesse insuffisamment nombreux pour les effluents.

Un deuxième type d'inconvénients et de limitations concerne le manque de souplesse au regard d'une utilisation du séparateur avec ou sans module de by-pass. En effet, jusqu'à présent, l'installateur décide au départ du type de séparateur à utiliser en fonction des conditions et des exigences concernées, et en particulier décide s'il y a lieu d'utiliser ou non un dispositif de by-pass. Lorsque la zone concernée présente une surface à densité de pollution élevée, comme c'est le cas pour les stations-service, les aires de lavage, ou les quais maritimes, on utilise en général un séparateur à hydrocarbures sans dispositif de by-pass, alors qu'avec des zones dont la surface est à densité de pollution faible, telles que des routes, il est intéressant d'utiliser un dispositif de by-pass qui permet de traiter l'essentiel de la pollution dans la majorité des situations.

### OBJET DE L'INVENTION

L'invention a pour objet de proposer un séparateur à hydrocarbures dont la conception vise à minimiser, voire supprimer, les inconvénients et/ou limitations du deuxième type précité, concernant les écoulements de sortie en vue de permettre une utilisation du séparateur aussi bien avec que sans caisson de by-pass.

### DEFINITION GENERALE DE L'INVENTION

Le problème précité est résolu conformément à l'invention grâce à un séparateur à hydrocarbures destiné au traitement d'eaux de ruissellement, comportant un caisson principal délimitant intérieurement un compartiment débourbeur et un compartiment séparateur de part et d'autre d'un trou d'homme, avec dans le compartiment séparateur un tubage associé à l'écoulement de sortie ainsi qu'un flotteur mobile verticalement et formant obturateur automatique, ledit séparateur comportant un module d'écoulement de sortie disposé à l'intérieur du caisson principal, ledit module d'écoulement de sortie comprenant une embase supportant un tubage et un flotteur, et le module d'écoulement de sortie étant agencé dans l'une ou l'autre de deux positions différentes, dont une première position correspondant à une utilisation du séparateur avec un caisson de by-pass monté extérieurement en appui direct sur le caisson principal, dans laquelle le tubage communique avec un compartiment de sortie du caisson de by-pass, et une deuxième position correspondant à une utilisation du séparateur sans caisson de by-pass, dans laquelle le tubage communique avec un orifice de sortie du caisson principal.

Ainsi, il est désormais possible d'utiliser le même caisson principal pour une utilisation du séparateur avec ou sans caisson de by-pass, le mode d'utilisation retenu déterminant alors le choix de la position du module d'écoulement de sortie parmi la première et la deuxième positions précitées.

De préférence, les deux positions du module d'écoulement de sortie se correspondent transversalement de 180°, sans modification du positionnement en hauteur dudit module d'écoulement de sortie dans le caisson principal.

Avantageusement, le caisson principal présente des surfaces latérales de guidage s'étendant dans une direction verticale, lesdites surfaces servant à guider le flotteur lors du coulissement vertical de celui-ci, dans l'une et l'autre des deux positions du module d'écoulement de sortie. En particulier, le flotteur est de forme cylindrique, et les surfaces latérales de guidage sont des portions de cylindres d'axe vertical. Le flotteur peut également être guidé par un profilé vertical monté sur l'embase du module d'écoulement de sortie, ledit flotteur étant maintenu dans l'une ou l'autre des deux positions dudit module d'écoulement de sortie, d'un côté par une surface latérale de guidage faisant partie du caisson principal, et du côté opposé par le profilé vertical.

De préférence encore, le compartiment séparateur du caisson principal présente une cellule terminale recevant et maintenant l'embase du module d'écoulement de sortie qui repose sur le fond dudit caisson principal, dans l'une ou l'autre des deux positions dudit module d'écoulement de sortie. En particulier la cellule terminale du caisson principal présente également des facettes supérieures horizontales assurant le blocage vertical de l'embase du module d'écoulement de sortie.

Avantageusement encore, dans la première position du module d'écoulement de sortie, le tubage est constitué par un cylindre dont l'extrémité supérieure est reçue dans un orifice associé de la cloison inférieure du caisson de by-pass, et dans la deuxième position du module d'écoulement de sortie, le tubage est constitué par le même cylindre alors prolongé par un coude démontable dont l'extrémité de sortie est reçue dans l'orifice de sortie du caisson principal. En particulier, le tubage est monté sur l'embase du module d'écoulement de sortie en pouvant coulisser dans un orifice associé de ladite embase, de façon à permettre un éventuel réglage en hauteur dudit tubage.

De préférence enfin, l'embase du module d'écoulement de sortie est un caisson creux de forme générale parallélépipédique qui repose sur le fond du caisson principal.

D'autres caractéristiques et avantages de l'invention apparaîtront plus clairement à la lumière de la description qui va suivre et des dessins annexés, concernant un mode de réalisation particulier.

### BREVE DESCRIPTION DES DESSINS

Il sera fait référence aux figures des dessins annexés, où :
- la figure 1 est une vue éclatée en perspective d'un séparateur à hydrocarbures conforme à l'invention, dont on a sorti les équipements intérieurs afin de mieux les distinguer ;
- la figure 2 est une vue analogue à celle de la figure 1, illustrant un séparateur à hydrocarbures équipé d'un caisson de by-pass, le caisson principal du séparateur restant quant à lui le même ;
- la figure 3 est une vue en bout du séparateur de la figure 2, avec son caisson de by-pass mis en place sur le caisson principal ;
- la figure 4 est une coupe selon IV-IV de la figure 3, permettant de mieux distinguer l'agencement des équipements intérieurs du séparateur, et en particulier la progression des écoulements depuis le compartiment débourbeur jusqu'au compartiment séparateur du caisson principal dudit séparateur, en passant par le filtre de coalescence ;
- les figures 5 et 6 illustrent en perspective le module de circulation équipant subsidiairement aussi le séparateur de l'invention, respectivement avec et sans les parois de séparation verticales associées et le filtre de coalescence à direction de passage verticale ;
- la figure 7 est une vue latérale du séparateur précité, dans le cas d'une utilisation avec un caisson de by-pass, avec un arrachement de la paroi latérale du caisson principal permettant de mieux distinguer le module d'écoulement de sortie équipant subsidiairement aussi le séparateur de l'invention ;
- la figure 8 est une coupe selon VIII-VIII de la figure 7, et la figure 9 illustre à plus grande échelle, le détail IX de la figure 8 ;
- la figure 10 est une vue en perspective du séparateur précité, avec son caisson de by-pass mis en place, et la figure 11 illustre, à plus grande échelle, le détail XI de la figure 10 permettant de mieux distinguer le module d'écoulement de sortie qui équipe fondamentalement le séparateur de l'invention ;
- les figures 12 à 16 reprennent respectivement les figures 7 à 11 précédentes, mais pour le même séparateur n'utilisant pas de caisson de by-pass, le module d'écoulement de sortie précité étant alors disposé dans une deuxième position correspondant à un retournement de 180° par rapport à de la première position précédemment illustrée.

### DESCRIPTION DETAILLEE DU MODE DE REALISATION PREFERE

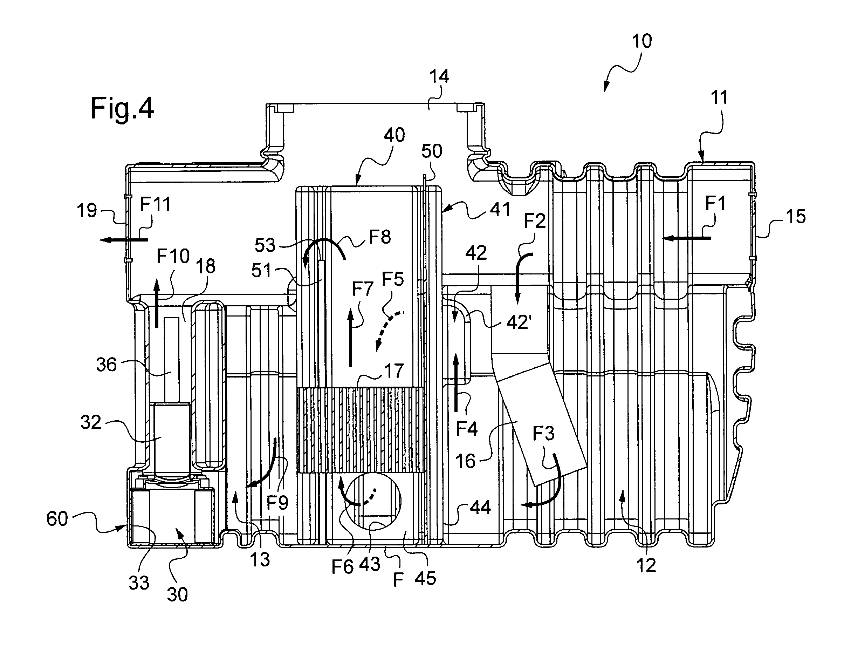

Sur les figures, on distingue un séparateur à hydrocarbures, noté 10, conforme à l'invention. Le séparateur à hydrocarbures 10 comporte un caisson principal 11 qui, comme cela est mieux visible sur la coupe de la figure 4, délimite intérieurement un compartiment débourbeur 12 et un compartiment séparateur 13 de part et d'autre d'un trou d'homme 14.

Comme pour les séparateurs à hydrocarbures traditionnels, les écoulements pénètrent dans le caisson principal 11 par un orifice d'entrée (selon le cas l'orifice d'entrée 15 du caisson principal 11, ou l'orifice d'entrée 27' du dispositif de by-pass 20 lorsqu'un tel dispositif est utilisé), conformément à la flèche F1, puis pénètrent par une éventuelle tubulure 16 dans le compartiment débourbeur 12, conformément à la flèche F2. Les écoulements débouchent alors de la tubulure 16 conformément à la flèche F3, et suivent un passage obligé menant à un filtre de coalescence 17, en aval duquel les écoulements pénètrent dans le compartiment séparateur 13, conformément à la flèche F9, et en ressortent conformément à la flèche F10, en remontant, pour ressortir du caisson principal 11 par un orifice de sortie ( selon le cas l'orifice de sortie 19 du caisson principal 11, ou l'orifice de sortie 27 du dispositif de by-pass 20 lorsqu'un tel dispositif est utilisé), conformément à la flèche F11.

En l'espèce, le séparateur à hydrocarbures 10 comporte un module de circulation, noté 40, qui constitue un équipement ne faisant cependant pas partie de l'invention.

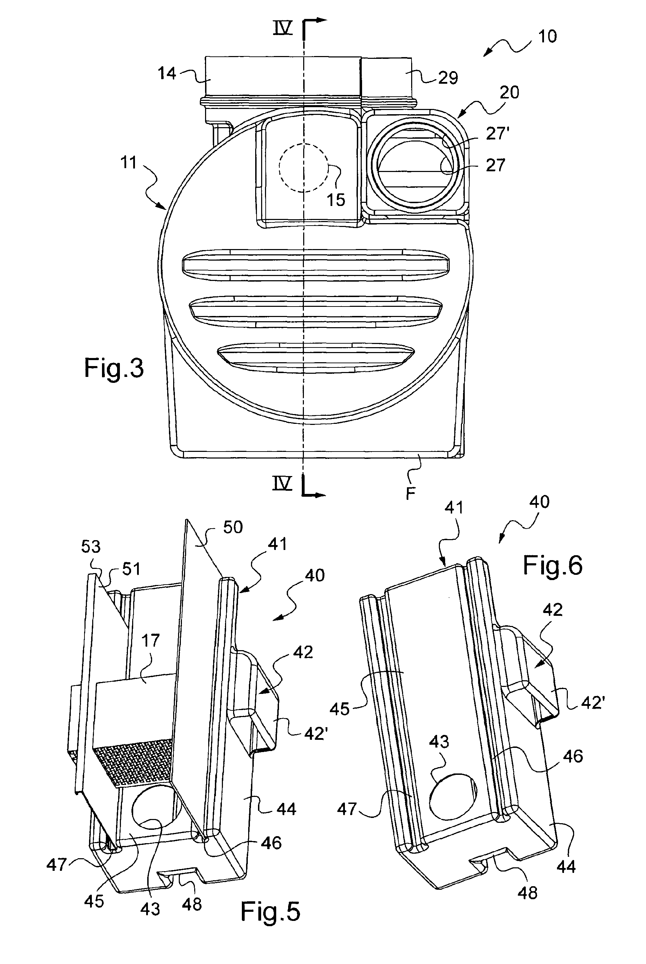

Le module de circulation 40 est disposé à l'intérieur du caisson principal 11, en amont du filtre de coalescence 17 par référence au sens de circulation des écoulements. Ce module de circulation 40, mieux visible sur les figures 5 et 6 qui l'illustrent séparément à plus grande échelle, se présente sous la forme d'un caisson indépendant 41, avec une entrée haute 42 du côté du compartiment débourbeur 12 et une sortie basse 43 débouchant en dessous du filtre de coalescence 17.

Ainsi, contrairement aux structures traditionnelles précitées, les écoulements provenant du compartiment débourbeur 12 pénètrent dans le module de circulation 40 par l'entrée haute 42 de celui-ci, conformément à la flèche F4, puis redescendent conformément à la flèche F5 à l'intérieur du module de circulation 40, pour ressortir par la sortie basse 43 dudit module de circulation conformément à la flèche F6, en arrivant alors en dessous du filtre de coalescence 17. Par suite les écoulements traversent le filtre de coalescence 17 dans une direction montante essentiellement verticale, conformément à la flèche F7. Un tel passage des écoulements dans une direction verticale présente naturellement de nombreux avantages au niveau de l'efficacité du filtrage et de la réduction des pertes de charges.

En aval du filtre de coalescence 17, les écoulements remontent à un niveau élevé, pour redescendre ensuite, conformément à la flèche F8, en pénétrant dans le compartiment séparateur 13, conformément à la flèche F9.

On constate ainsi que la trajectoire des écoulements est pratiquement doublée par rapport à celles que l'on avait avec les réalisations traditionnelles rappelées plus haut, et de plus on a augmenté considérablement les changements de vitesses accélération/décélération pour les effluents, ce qui est extrêmement favorable pour l'efficacité du processus de séparation.

La structure ainsi proposée est en outre particulièrement simple, et de faible coût de fabrication.

En effet, on distingue un ensemble de deux parois de séparation verticales 50, 51 entre lesquelles est monté le filtre de coalescence 17, lesdites parois servant à canaliser les écoulements ascendants en sortie du module de circulation 40.

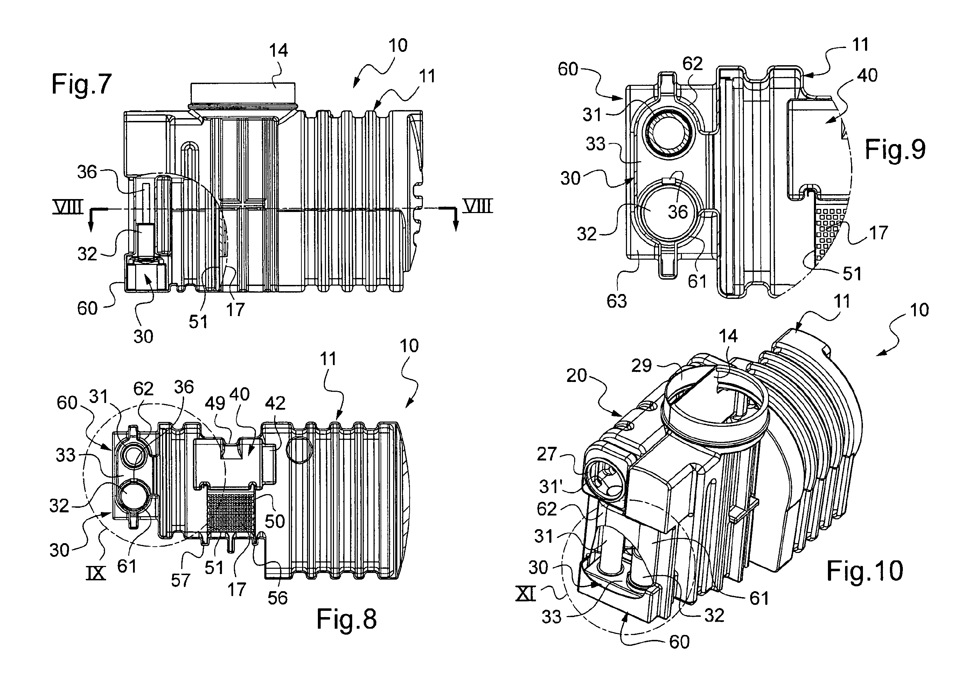

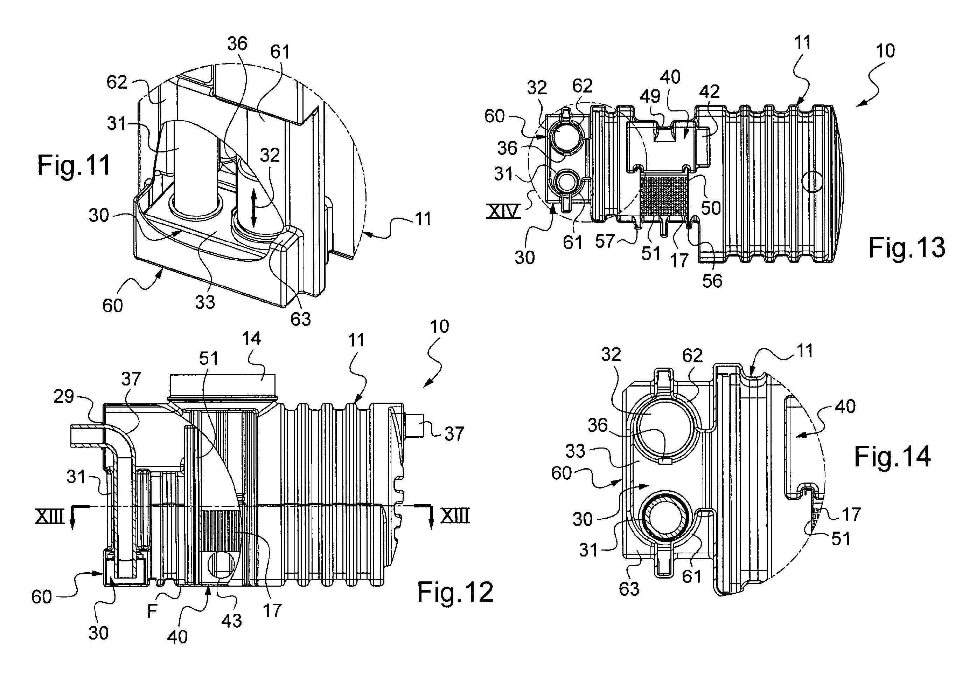

Les deux parois de séparation verticales 50, 51 sont maintenues en place par des glissières verticales 46, 47 du module de circulation 40, glissières qui sont mieux visibles sur les figures 5 et 6, et par des glissières verticales 56, 57 du caisson principal 11, glissières qui sont mieux visibles sur les figures 8 et 13. Ainsi, les parois de séparation verticales 50 et 51 sont insérées à l'intérieur du caisson principal 11 par le trou d'homme 14, avec leurs bords verticaux 58, 58', respectivement 59, 59', s'insérant dans les glissières de guidage associées, à la façon des cadres d'une ruche d'abeilles.

En l'espèce, les deux parois de séparation verticales 50, 51 supportent le filtre de coalescence 17, lequel filtre est ici en appui direct contre lesdites parois de séparation verticales. Comme le filtre de coalescence 17 est en général de structure légère, la fixation directe dudit filtre contre les parois 50, 51, par collage, accrochage ou analogue suffit à en assurer le bon positionnement, sans nécessiter de prévoir des appuis complémentaires. Ceci permet donc de réduire considérablement le nombre des composants nécessaires pour les équipements intérieurs.

La paroi 50 forme un barrage pour les écoulements d'entrée, afin de forcer ceux-ci à passer en premier lieu dans le compartiment débourbeur 12. Par contre, l'autre paroi 51 qui est du côté du compartiment séparateur 13 présente un bord supérieur 53 qui est quant à lui abaissé pour constituer une surverse.

Ainsi que cela est mieux visible sur les figures 8 et 13, il est en outre prévu que le module de circulation 40 soit juxtaposé, dans une direction transversale, au filtre de coalescence 17, ledit module de circulation étant maintenu en place entre un bord intérieur 58, 59 des parois de séparation verticales 50, 51 et une paroi latérale du caisson latéral 11. En outre, en vue d'un positionnement parfaitement stable du module de circulation 40, ledit module présente une rainure verticale 48 qui coopère avec une nervure verticale associée 49 du caisson principal 11. On pourra naturellement en variante remplacer la rainure 48 par une nervure, et la nervure 49 par une rainure.

Le module de circulation 40 est ainsi parfaitement positionné à l'intérieur du caisson principal 11, et il reste en place quelle que soit la force des écoulements traversant le caisson principal 11.

Ainsi que cela est mieux visible sur les figures 5 et 6, on a prévu que le module de circulation 40 présente ici une entrée haute 42 sur une première face 44 qui est tournée vers le compartiment débourbeur 12, et une sortie basse 43 sur une deuxième face 45 sensiblement orthogonale à la première face 44. L'entrée haute 42 est ici un orifice garni d'un capotage 42', et la sortie basse 43 est un simple orifice circulaire.

Enfin, comme cela est mieux visible sur la coupe de la figure 4, le module de circulation 40 repose directement sur le fond noté F du caisson principal 11.

Le module de circulation 40 se présente ainsi sous la forme d'un caisson indépendant 41 qui est unitaire et de préférence réalisé en matière plastique. On parvient à une fabrication aisée du module pour un coût minimal, lequel module est de plus amovible. Bien entendu, le module de circulation 40 aura un dimensionnement qui permet son insertion ou son extraction par le trou d'homme 14 du caisson principal 11.

Dans le cadre d'une éventuelle opération de maintenance ou de réparation, il sera ainsi aisé d'extraire le module de circulation 40 par le trou d'homme 14, afin d'en remplacer certains composants, ou encore de remplacer le filtre de coalescence 17.

L'équipement qui précède, avec un module de circulation 40 tel que précédemment décrit, peut bien entendu équiper un séparateur à hydrocarbures qui est utilisé avec un caisson de by-pass monté extérieurement en appui direct sur le caisson principal 11.

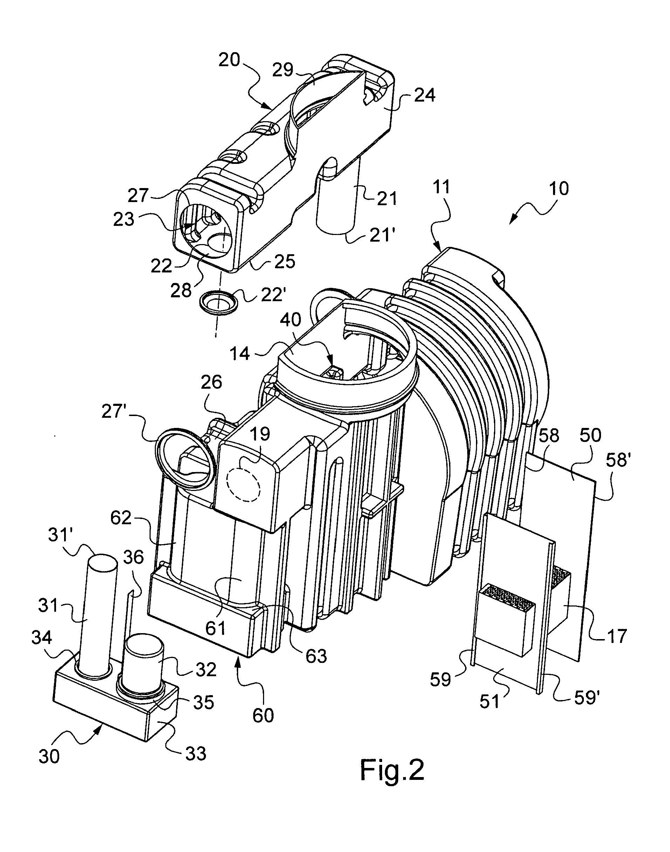

On peut se reporter à la figure 2 qui permet de mieux distinguer le caisson de by-pass 20.

Le caisson de by-pass 20 comporte une tubulure d'entrée 21 dont l'orifice inférieur 21' débouche dans le compartiment débourbeur 12 du caisson principal 11 lorsque le caisson de by-pass 20 est monté extérieurement en appui direct sur le caisson principal 11 par contact des faces horizontales concernées 25, 26, avec un appui de la face verticale 24 du caisson de by-pass 20 contre le caisson principal 11 (comme cela est mieux visible sur la figure 3). Le caisson de by-pass 20 comporte une cloison inférieure 28 qui présente un orifice de sortie 22 associé à la sortie des écoulements provenant du compartiment séparateur 13 du caisson principal 11, ces écoulements sortant du dispositif de by-pass 20 par un orifice 27 équipé d'un joint 27' et une canalisation de sortie non représentée ici.

On notera que le caisson de by-pass 20 présente en l'espèce un trou d'homme 29 à section en segment de cercle qui est complémentaire de la section du trou d'homme 14 du caisson principal 11, l'ensemble constituant ainsi un double trou d'homme dont la section périphérique est circulaire. Un tel mode de réalisation permet de prévoir un regard unique pour le séparateur équipé de son dispositif de by-pass.

Il va de soi que la mise en place du caisson de by-pass 20, qui est à l'extérieur du caisson principal 11, tout en étant directement en appui sur celui-ci, ne perturbe aucunement la présence du module de circulation 40.

Ainsi, le module de circulation précédemment décrit peut aussi bien équiper un séparateur à hydrocarbures ne présentant pas de caisson de by-pass qu'un séparateur à hydrocarbures présentant un caisson de by-pass.

On va maintenant décrire plus en détail un autre équipement du séparateur à hydrocarbures qui constitue quant à lui l'objet principal de l'invention, en rapport avec les écoulements de sortie.

Tout comme les séparateurs à hydrocarbures de conception traditionnelle, le présent séparateur à hydrocarbures 10 comporte un compartiment séparateur 13 à l'intérieur duquel sont agencés un tubage 31 associé à l'écoulement de sortie, ainsi qu'un flotteur 32 mobile verticalement et formant obturateur automatique.

Le séparateur à hydrocarbures 10 comporte ainsi un module d'écoulement de sortie 30 qui est disposé à l'intérieur du caisson principal 11, ledit module d'écoulement de sortie comprenant une embase 33 supportant le tubage 31 et le flotteur 32.

Conformément à une caractéristique de l'invention, le module d'écoulement de sortie 30 est agencé dans l'une ou l'autre de deux positions différentes, dont une première position, notée P1, correspondant à une utilisation du séparateur 10 avec un caisson de by-pass 20 monté extérieurement en appui direct sur le caisson principal 11, et une deuxième position, notée P2, correspondant à une utilisation du séparateur 10 sans caisson de by-pass 20.

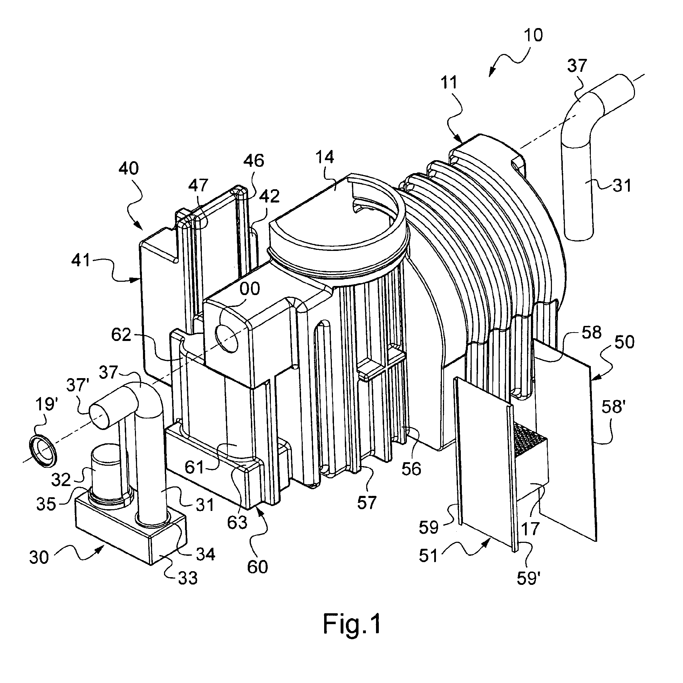

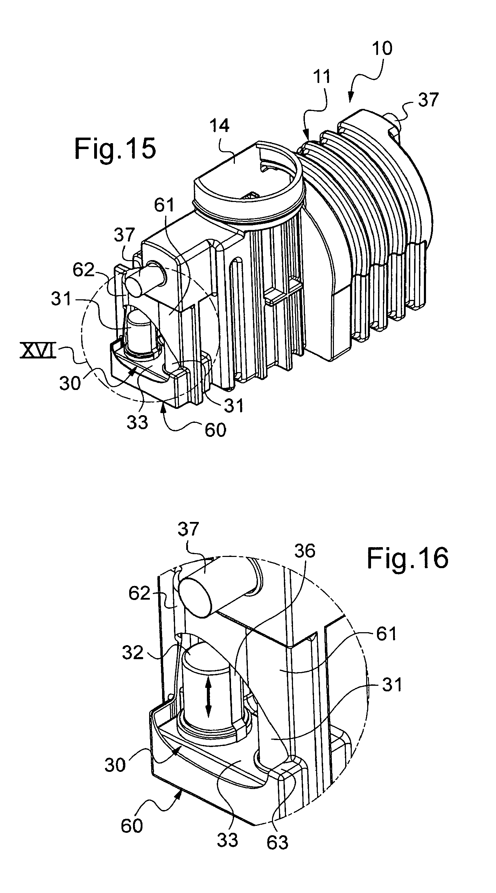

La première position P1 du module d'écoulement de sortie 30 correspond aux figures 2 à 4 et 7 à 11, tandis que la deuxième position P2 correspond aux figures 1 et 12 à 16.

Dans la première position P1 du module d'écoulement de sortie 30, qui correspond à une utilisation du séparateur 10 avec un caisson de by-pass 20 monté extérieurement en appui direct sur le caisson principal 11, le tubage 31 communique avec le compartiment de sortie 23 du caisson de by-pass 20. Le tubage précité est constitué par un cylindre 31, dont l'extrémité 31' est reçue dans l'orifice associé 22 de la cloison inférieure 28 du caisson de by-pass 20, en passant dans un joint d'étanchéité associé 22'. Les écoulements de sortie passent alors à l'intérieur de l'embase 33 du module d'écoulement de sortie 30, qui est un caisson creux de forme générale parallélépipédique reposant sur le fond F du caisson principal 11, puis montent à l'intérieur du tubage 31 pour parvenir à l'intérieur du dispositif de by-pass 20, et sortir enfin par l'orifice de sortie 27 de celui-ci. Dans ce cas, l'orifice de sortie 19 précité du caisson principal 11 n'existe pas, mais, si l'on souhaite utiliser le même caisson principal 11 pour un séparateur à hydrocarbures non équipé de caisson de by-pass, il suffit alors de désoperculer la paroi terminale correspondante pour former l'orifice de sortie 19.

Par ailleurs, le flotteur 32, qui repose en position basse sur une collerette associée 35 montée sur l'embase 33, doit pouvoir être guidé lors de son mouvement vertical.

A la différence des structures traditionnelles de séparateurs à hydrocarbures, dans lesquelles il est prévu un guidage du flotteur assuré par des tringles agencées verticalement autour dudit flotteur pour former une cage, le guidage du flotteur 32 est assuré ici en partie par le caisson principal 11 lui-même. En effet, le caisson principal 11 présente une surface latérale de guidage 62 s'étendant dans une direction verticale, ladite surface servant à guider le flotteur 32 lors du coulissement vertical de celui-ci. Comme le flotteur 32 est de forme cylindrique, la surface latérale de guidage de surface 62 est une portion de cylindre d'axe vertical. Le flotteur 32 est ici également guidé par un profilé vertical 36 qui est monté sur l'embase 33 du module d'écoulement de sortie 30. Ainsi, le flotteur 32 est toujours maintenu d'un côté par la surface latérale de guidage 62 faisant partie du caisson principal 11, et du côté opposé par le profilé vertical 36.

Dans la deuxième position P2 du module d'écoulement de sortie 30, le tubage 31 communique avec l'orifice de sortie 19 du caisson principal 11. Dans ce cas, le tubage est constitué par le même cylindre 31 que précédemment, mais il est prolongé par un coude démontable 37 dont l'extrémité de sortie 37' est reçue dans l'orifice de sortie 19 du caisson principal 11.

Dans cette deuxième position P2, pour ce qui est du flotteur 32, celui-ci est alors guidé comme précédemment par le profilé vertical 36, et de surcroît par une surface latérale de guidage 61 du caisson principal 11 qui est analogue à la surface de guidage 62 précitée. Ainsi, le flotteur 32 est là encore maintenu d'un côté par la surface latérale de guidage 61 faisant partie du caisson principal 11, et du côté opposé par le profilé vertical 36.

On aura noté que les deux positions P1, P2 du module de sortie 30 se correspondent en l'espèce transversalement de 180°, sans modification du positionnement en hauteur dudit module d'écoulement de sortie 30 dans le caisson principal 11. Il s'agit donc d'un simple retournement pour passer d'une position à l'autre. Le caisson principal 11, avec ses surfaces latérales de guidage 61, 62, permet ainsi de participer au guidage du flotteur 32 lors du coulissement vertical de celui-ci dans l'une et l'autre des deux positions P1, P2 du module d'écoulement de sortie 30.

Le compartiment séparateur 13 du caisson principal 11 présente en outre inférieurement une cellule terminale, notée 60, recevant et maintenant l'embase 33 du module d'écoulement de sortie 30 qui repose sur le fond F du caisson principal 11. L'embase 33 du module d'écoulement de sortie 30 est ainsi reçue et maintenue dans la cellule terminale 60 dans l'une ou l'autre des deux positions P1, P2 du module d'écoulement de sortie 30.

L'embase 33 est un caisson creux, mais sans effet de poussée vers le haut. Néanmoins, notamment pour des opérations de stockage ou de transport, il est intéressant de prévoir que l'embase 33 soit également bien maintenue en hauteur dans le caisson principal 11. A cet effet, on a prévu que la cellule terminale 60 du caisson principal 11 présente également des facettes supérieures horizontales 63 assurant le blocage vertical de l'embase 33 du module d'écoulement de sortie 30.

La conception originale d'un tel module d'écoulement de sortie 30 permet ainsi d'équiper indifféremment un séparateur à hydrocarbures utilisant un caisson de by-pass, ou n'utilisant pas un tel caisson de by-pass, et ce avec le même caisson principal 11, ce qui simplifie considérablement la logistique, et diminue les coûts de fabrication.

Le passage d'une position à l'autre pour le module d'écoulement de sortie 30 peut être aisément réalisé du fait de l'accès par le trou d'homme 14 à l'intérieur du caisson principal 11. Il suffit alors à l'opérateur de tirer l'embase 33 du module d'écoulement de sortie 30 hors de la cellule terminale 60 associée en faisant glisser ladite embase sur le fond F du caisson principal 11, puis de procéder à un retournement de 180° dudit module pour l'amener dans l'autre position souhaitée, et enfin de repousser l'embase 33 dans sa cellule 60. Selon le cas, on ajoute ou on retire le coude démontable 37 prévu en extrémité haute du cylindre 31 constituant le tubage. Une telle opération est rapide et très simple à exécuter pour l'opérateur.

L'invention n'est pas limitée aux modes de réalisation qui viennent d'être décrits, mais englobe au contraire toute variante reprenant, avec des moyens équivalents, les caractéristiques énoncées plus haut.

## Revendications

1. Séparateur à hydrocarbures destiné au traitement d'eaux de ruissellement, comportant un caisson principal (11) délimitant intérieurement un compartiment débourbeur (12) et un compartiment séparateur (13) de part et d'autre d'un trou d'homme (14), avec dans le compartiment séparateur (13) un tubage (30) associé à l'écoulement de sortie ainsi qu'un flotteur (31) mobile verticalement et formant obturateur automatique, **caractérisé en ce qu'**il comporte un module d'écoulement de sortie (30) disposé à l'intérieur du caisson principal (11), ledit module d'écoulement de sortie comprenant une embase (33) supportant un tubage (31) et un flotteur (32), et **en ce que** le module d'écoulement de sortie (30) est agencé dans l'une ou l'autre de deux positions différentes, dont une première position (P1) correspondant à une utilisation du séparateur (10) avec un caisson de by-pass (20) monté extérieurement en appui direct sur le caisson principal (11), dans laquelle le tubage (31) communique avec un compartiment de sortie (23) du caisson de by-pass (20), et une deuxième position (P2) correspondant à une utilisation du séparateur (10) sans caisson de by-pass (20), dans laquelle le tubage (31) communique avec un orifice de sortie (19) du caisson principal (11).

2. Séparateur selon la revendication 1, **caractérisé en ce que** les deux positions (P1, P2) du module d'écoulement de sortie (30) se correspondent transversalement de 180°, sans modification du positionnement en hauteur dudit module d'écoulement de sortie (30) dans le caisson principal (11).

3. Séparateur selon la revendication 2, **caractérisé en ce que** le caisson principal (11) présente des surfaces latérales de guidage (61, 62) s'étendant dans une direction verticale, lesdites surfaces servant à guider le flotteur (32) lors du coulissement vertical de celui-ci, dans l'une et l'autre des deux positions (P1, P2) du module d'écoulement de sortie (30).

4. Séparateur selon la revendication 3, **caractérisé en ce que** le flotteur (32) est de forme cylindrique, et les surfaces latérales de guidage (61, 62) sont des portions de cylindres d'axe vertical.

5. Séparateur selon la revendication 4, **caractérisé en ce que** le flotteur (32) est également guidé par un profilé vertical (36) monté sur l'embase (33) du module d'écoulement de sortie (30), ledit flotteur étant maintenu dans l'une ou l'autre des deux positions (P1, P2) dudit module d'écoulement de sortie , d'un côté par une surface latérale de guidage (61, 62) faisant partie du caisson principal (11), et du côté opposé par le profilé vertical (36).

6. Séparateur selon l'une des revendications 1 à 5, **caractérisé en ce que** le compartiment séparateur (13) du caisson principal (11) présente une cellule terminale (60) recevant et maintenant l'embase (33) du module d'écoulement de sortie (30) qui repose sur le fond (F) dudit caisson principal (11), dans l'une ou l'autre des deux positions (P1, P2) dudit module d'écoulement de sortie.

7. Séparateur selon la revendication 6, **caractérisé en ce que** la cellule terminale (60) du caisson principal (11) présente également des facettes supérieures horizontales (63) assurant le blocage vertical de l'embase (33) du module d'écoulement de sortie (30).

8. Séparateur selon l'une des revendications 1 à 7, **caractérisé en ce que**, dans la première position (P1) du module d'écoulement de sortie (30), le tubage est constitué par un cylindre (31) dont l'extrémité supérieure (31') est reçue dans un orifice associé (22) de la cloison inférieure (28) du caisson de by-pass (20), et dans la deuxième position (P2) du module d'écoulement de sortie (30), le tubage est constitué par le même cylindre (31) alors prolongé par un coude démontable (37) dont l'extrémité de sortie (37') est reçue dans l'orifice de sortie (19) du caisson principal (11).

9. Séparateur selon la revendication 8, **caractérisé en ce que** le tubage (31) est monté sur l'embase (33) du module d'écoulement de sortie (30) en pouvant coulisser dans un orifice associé (34) de ladite embase, de façon à permettre un éventuel réglage en hauteur dudit tubage.

10. Séparateur selon l'une des revendications 1 à 9, **caractérisé en ce que** l'embase (33) du module d'écoulement de sortie (30) est un caisson creux de forme générale parallélépipédique qui repose sur le fond (F) du caisson principal (11).
